# EUROPÄISCHE PATENTSCHRIFT

(11) **EP 0 529 287 B1**
(45) Veröffentlichungstag und Bekanntmachung des Hinweises auf die Patenterteilung: **20.09.1995**
(21) Anmeldenummer: 92112304.8
(22) Anmeldetag: 18.07.1992
(51) Int. Cl.: A47J 42/56, A47J 43/044, A47J 43/07, B01F 15/00

(54) **Zerkleinerungsgerät für eine elektrische Küchenmaschine**
Comminuting device for an electrical kitchen appliance
Dispositif de broyage pour un robot de cuisine électrique

(30) Priorität: 28.08.1991 DE 4128456
(43) Veröffentlichungstag der Anmeldung: 03.03.1993
(73) Patentinhaber: Braun Aktiengesellschaft, Frankfurt am Main (DE)
(72) Erfinder: Andrés, Miguel Rodriguez, E08950 Esplugues De Llobregat, Barcelona (ES); Rius, Antonio Rebordosa, W-6370 Oberursel (DE); Lucas, Rafael Ponce, E-Pamplona (ES); Burger, Diethard, W-6222 Geisenheim 2 (DE)

(56) Entgegenhaltungen:
- EP-A- 0 013 805
- EP-A- 0 221 392
- EP-A- 0 324 115
- DE-A- 2 250 177
- DE-A- 3 117 773
- FR-A- 2 472 925
- FR-A- 2 587 592

## Beschreibung

Die Erfindung bezieht sich auf ein Zerkleinerungsgerät zum Zerkleinern von Nahrungsmitteln nach dem Oberbegriff des Anspruchs 1.

Es ist bereits ein elektrisches Haushaltsgerät bekannt (DE-31 17 773 A1), zu dem ein topfartiger Aufsatz gehört, in dem ein von einem Antriebsmotor antreibbares Schneidwerk angeordnet ist, das mit einer Nachlaufbremse zum raschen Stillsetzen des Antriebsmotors ausgestattet ist. Die hierzu notwendige Bremse befindet sich zwischen einem auf das einen Motor aufweisende Gerät aufsetzbaren Deckel und einem Motorsockel. Wird der Deckel mit dem Motorsockel verriegelt, so wird eine zugehörige Rastvorrichtung nach unten bewegt und der zwischen dem Deckel und dem Sockel vorgesehene Reibbelag von einer Mitnehmerscheibe entfernt, so daß die Bremse zwischen dem Arbeitswerkzeug und dem Gerät nicht mehr wirken kann. Eine derartige Bremse läßt sich jedoch nur bei einem derartigen Haushaltsgerät aufgrund der konstruktiven Gegebenheiten einsetzen.

Ferner ist aus der EP-0 221 392 B1 ein Zerkleinerungsgerät zum Zerkleinern von beispielsweise Petersilie, Zwiebeln etc. bekannt, das aus einem Deckel und einem vom Deckel verschließenden Behälter gebildet wird. Der Deckel weist eine erste und zweite Kupplung als Kupplungsvorrichtung auf, die durch eine Getriebeanordnung miteinander verbunden sind. Die im Behälter befindliche zweite Kupplung ist mit einem im Behälter rotierbaren Messer drehbar verbindbar. Zum Antrieb des Messers wird die erste Kupplung mit dem Arbeitswerkzeug einer Küchenmaschine, beispielsweisemit dem Messer eines Stabmixers, in Eingriff gebracht, so daß nach Einschalten des Stabmixers das rotierende Arbeitswerkzeug die erste Kupplung in Drehung versetzt und dadurch über das Getriebe und die zweite Kupplung das im Behälter befindliche Messer ebenfalls rotiert. Wird der Stabmixer von der ersten Kupplung entfernt und auf diese Weise der Antrieb zu dem im Behälter des Zerkleinerungsgerätes vorgesehenen Messer unterbrochen, so läuft dieses noch längere Zeit nach und dies insbesondere dann, wenn sich keine Nahrungsmittel im Behälter befinden. Dies kann zu Verletzungen einer Hand einer Bedienungsperson führen, wenn diese bei noch rotierendem Messer den Deckel von dem Behälter abhebt und in das Behälterinnere eingreift, um das Messer aus dem Behälter zu entfernen.

Schließlich ist noch aus der DE-A-22 50 177 ein Küchengerät bekannt, bei dem im Übertragungsweg vom Antriebsmotor zum Arbeitswerkzeug eine das Arbeitswerkzeug abbremsende Bremse ausgebildet ist. Die Bremse wird durch einen die Antriebseinrichtung und das Messer zentral durchdringenden Druckstab gesteuert, der seinerseits vom Deckel des Gerätes gesteuert wird. Das Arbeitswerkzeug selbst ist im Boden des Küchengerätes drehbar oder ortsfest gelagert.

Aufgabe der Erfindung ist es daher, ein mit einem rotierenden Messer versehenes Zerkleinerungsgerät zu schaffen, bei dem auf besonders einfache Weise spätestens nach Entfernen der Antriebseinrichtung von dem Zusatzgerät das Arbeitswerkzeug und somit das Messer zum Stillstand gelangt ist.

Diese Aufgabe wird erfindungsgemäß durch die Merkmale des kennzeichnenden Teils des Patentanspruchs 1 gelöst. Durch die von der axialen Verschiebung der Kupplungsvorrichtung gesteuerte Bremse läßt sich auf einfache Weise bei abgenommener Antriebseinrichtung, insbesondere eines Hand- oder Stabmixer, also in Lösestellung, das im Gehäuse verbleibende Arbeitswerkzeug sehr schnell abbremsen, so daß beim Zugriff einer Hand zum Messer keine Verletzungen infolge Rotation mehr auftreten können, da das Messer bereits zum Stillstand gelangt ist. Eine derartige Anordnung ist besonders leicht herstellbar, da als Bremse zwei gegeneinander reibende Teile genügen, die durch axiale Verschiebung gegen die Kraft einer Feder schnell und bequem gelöst (Betriebsstellung) oder in Eingriff (Lösestellung) gebracht werden können.

Durch die Erfindung kann der den Behälter verschließende Deckel mit seiner Kupplungsvorrichtung noch einfacher ausgestaltet werden. Durch die Integration der Bremse in das Arbeitswerkzeug brauchen nur diejenigen Arbeitswerkzeuge mit einer Bremse versehen werden, die ein Messer aufweisen. Wird beispielsweise mit einem nicht scharfen Rührwerkzeug gearbeitet, so muß das Arbeitswerkzeug nicht abgebremst werden, da es hier nach Abheben des Deckels und Eingreifen einer Hand in das Arbeitswerkzeug nicht zu Verletzungen kommt. Die Bremse wird also nur in die Arbeitswerkzeuge integriert, bei denen ein Nachlaufen vermieden werden soll. Wird also das Zusatzgerät mit einem Arbeitswerkzeug ohne Messer, sondern mit nicht scharfen Rührwerkzeugen angeboten, so werden Herstellkosten eingespart, da eine Bremse dann nicht mehr benötigt wird.

Zur Ausbildung einer Bremse im Arbeitswerkzeug wird vorgeschlagen, daß die Abtriebswelle auf einem im Boden des Behälters befestigten Lagerzapfen drehbar und gegenüber diesem axial verschiebbar ist, daß die Abtriebswelle eine Bohrung aufweist, in der die Feder ausgebildet ist, die sich einerseits mit Vorspannung über den Lagerzapfen und andererseits an einer dem Lagerzapfen gegenüberliegenden Stirnfläche der Abtriebswelle derart abstürtzt, daß beim Entkuppeln des Arbeitswerkzeuges von der Antriebswelle das Arbeitswerkzeug von der Feder soweit gegenüber dem Lagerzapfen axial verschoben wird, daß dabei ein an der Abtriebswelle des Arbeitswerkzeuges ausgebildetes erstes Bremselement an einem am Lagerzapfen ausgebildeten zweiten Bremselement in Reibeingriff gelangt. Das Arbeitswerkzeug stützt sich also an dem Lagerzapfen ab und wird beim Aufsetzen einer Antriebseinrichtung auf die Kupplungsvorrichtung zum Boden des Behälters derart verschoben, daß die Bremse außer Eingriff gelangt.

Die Ausbildung der Bremse im Arbeitswerkzeug ist auch dann von Vorteil, wenn die Antriebseinrichtung direkt auf das Arbeitswerkzeug aufgesetzt wird, da nach Lösen der Antriebseinrichtung das Arbeitswerkzeug selbsttätig abbremst, in dem das Arbeitswerkzeug sich vom Boden des Behälters entfernt und mit seinem ersten Bremselement an einem am Lagerzapfen ausgebildeten Vorsprung, der das zweite Bremselement bildet, reibschlüssig anliegt.

Um die Größe des Bremsmomentes in bestimmten Grenzen zu halten, das heißt, die von der Feder auf die Bremse ausgeübte Kraft soll einen bestimmten Wert nicht übersteigen, ist in einer Weiterbildung der Erfindung vorgesehen, daß sich die Feder über ein in der Bohrung axial verschiebbares Gleitelement am Lagerzapfen abstützt und daß am Gleitelement ein erster Anschlag ausgebildetet ist, der in Bremsstellung des Arbeitswerkzeuges an einem in der Bohrung angeordneten zweiten Anschlag anschlägt.

Um eine einfache Montage des Gleitelements, der Anschläge und der Bremse in der Bohrung des Arbeitswerkzeuges zu ermöglichen, wird in einer Weiterbildung der Erfindung vorgeschlagen, daß der zweite Anschlag von einer in der Bohrung fest angeordneten Hülse gebildet wird, daß die Hülse über die als zweites Reibelement ausgebildete Ringstufe das erste Bremselement hintergreift und daß die Hülse eine Bohrung aufweist, über die das Arbeitswerkzeug auf dem Lagerzapfen drehbar und axial verschiebbar gelagert ist.

Vorteilhaft ist es weiterhin, daß die Bohrung Längsnuten aufweist, in die beim Bremsvorgang die am Lagerzapfen ausgebildeten Vorsprünge eingreifen, die aber in Betriebsstellung in die Bohrung gelangen und so viel Abstand zum ersten Bremselement aufweisen, daß das Arbeitswerkzeug frei dreht. Beim Lösen der Kupplung vom Arbeitswerkzeug wandert die Abtriebswelle so weit nach oben, daß die gegenüberliegenden Vorsprünge am zweiten Bremselement zur Anlage gelangen und dann in die Längsnuten eingreifen, wodurch ein schlagartiger Stillstand des Arbeitswerzeuges verursacht wird.

Die Erfindung läßt sich insbesondere bei einem in einem Behälter rotierenden Messer, das über den Deckel von einem Stabmixer angetrieben wird, dadurch verwirklichen, daß die Kupplungsvorrichtung aus einer ersten und einer zweiten Kupplung besteht, daß die erste Kupplung mit einem Arbeitswerkzeug eines Handmixers, insbesondere Stabmixer, kuppelbar ist, daß die zweite Kupplung über eine Längsverzahnung mit der Abtriebswelle in Eingriff steht, daß die erste und zweite Kupplung auf einer Welle drehfest verbunden sind, daß die Welle in einem Gleitlager drehbar und axial verschiebbar angeordnet ist, daß die Welle in einem einen Behälter verschließenden Deckel drehbar gelagert ist und daß die erste Kupplung außerhalb und die zweite Kupplung innerhalb des Behälters bei auf dem Behälter aufgesetzten Deckel angeordnet ist. Sobald also der Stabmixer von der ersten Kupplung entfernt wird, wandert diese, hervorgerufen durch die Kraft der Feder, mitsamt der zweiten Kupplung nach oben und die Bremse gelangt in Bremseingriff, so daß das Messer sofort zum Stillstand gelangt, bevor der Deckel vom Behälter abgenommen worden ist.

In den Figuren ist die Erfindung an einem Ausführungsbeispiel eines Zerkleinerungsgerätes im Längsschnitt dargestellt. Es zeigen:
- Fig. 1: eine Schnittdarstellung eines Ausführungsbeispieles eines Zerkleinerungsgerätes im Längsschnitt, wobei das Messer im gebremsten Zustand dargestellt ist,
- Fig. 2: wie Fig. 1, jedoch wird hier das Messer nicht abgebremst,
- Fig. 3: Schnitt gemäß der Schnittführung III-III nach Fig. 2.

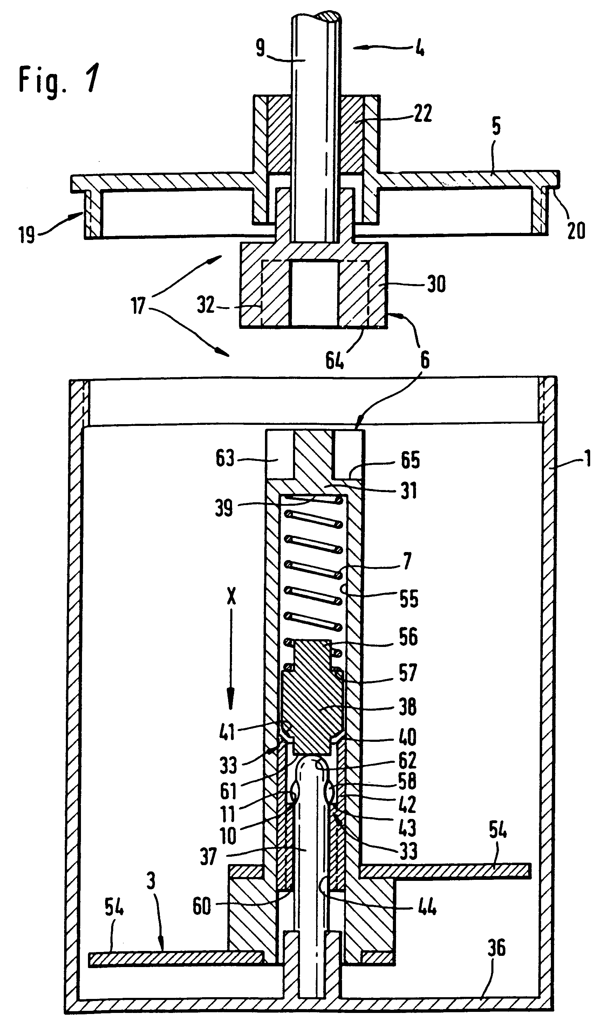

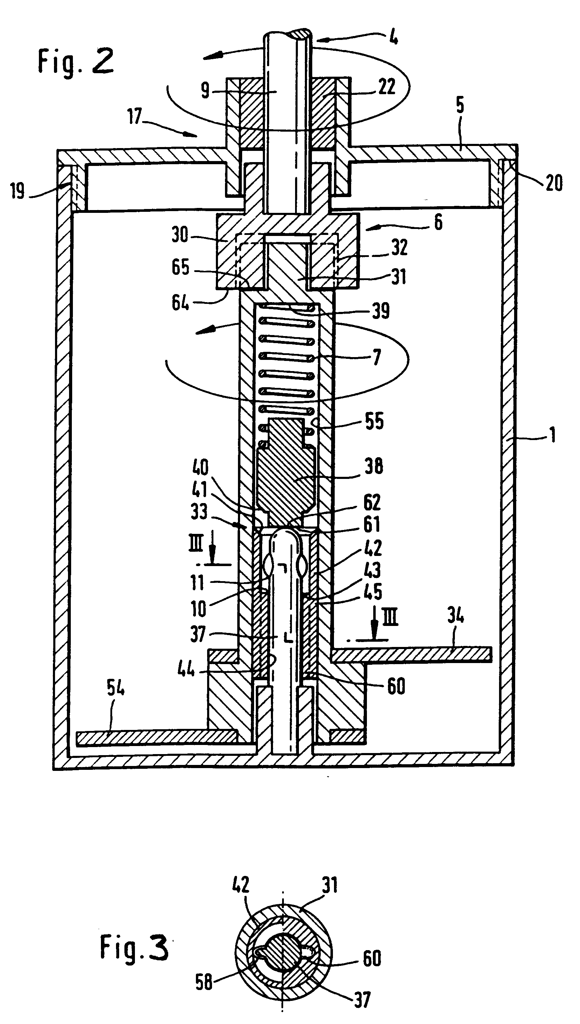

In den Figuren 1 und 2 ist der Deckel 5 vom Behälter 1 nach oben abgehoben dargestellt. Die erste Kupplung 4 ist zwar in den Figuren 1 und 2 durch das Positionszeichen 4 angedeutet, sie ist aber nicht dargestellt. Die Bremse 33 ist in einer in der Abtriebswelle 31 des Arbeitswerkzeuges 3 ausgebildeten Bohrung 55 angeordnet. Die Bohrung 55 besteht aus einer Sacklochbohrung, an deren Stirnfläche 39 sich eine Feder 7 mit ihrem einen Ende abstützt. Das andere Ende der Feder 7 stützt sich an einem Gleitelement 38 ab, das die Form eines Kolbens annimmt. Zur besseren Zentrierung der als Spiralfeder ausgebildeten Feder 7 in der Bohrung 55 greift in das Innere der Feder 7 ein am Gleitelement 38 ausgebildeter Zapfen 56 ein. Die Feder 7 stützt sich an einer am Gleitelement 38 ausgebildeten Ringstufe 57 ab. An dem der Ringstufe 57 gegenüberliegenden Ende des Gleitelements 38 ist eine sich zum Lagerzapfen 37 konisch verjüngende Ringfläche 40 ausgebildet, die einen ersten Anschlag bildet. Dem ersten Anschlag 40 ist gegenüberliegend eine als parallel zur Ringfläche 40 des ersten Anschlags verlaufende zweite Ringfläche 41 ausgebildet, die den zweiten Anschlag bildet. Die zweite Ringfläche 41 stellt das Ende einer Hülse 42 dar, die in der Bohrung 55 befestigt, beispielsweise eingeklebt oder eingepreßt ist.

In Fig. 1 liegt das Gleitelement 38 mit seinem ersten Anschlag 40 an dem zweiten Anschlag 41 an, während in Fig. 2 das Gleitelement 38 mit seinem ersten Anschlag 40 von dem zweiten Anschlag 41 nach oben abgehoben ist. In Fig. 1 und 2 wird die Hülse 42 eine Ringnut 43 auf, die in der in Fig. 1 dargestellten Position die am Lagerzapfen 37 ausgebildeten Vorsprünge 58 derart hintergreift, daß die an den Vorsprüngen 58 ausgebildete und als zweites Bremselement 11 dienende Unterseite an der Ringstufe 43 anliegt, die das erste Bremslement 10 bildet.

An die Ringstufe 43 schließt sich gemäß den Fig. 1 und 2 eine Bohrung 44 kleineren Durchmessers an, die an der Mantelfläche des Lagerzapfen 37 anliegt, so daß das Arbeitswerkzeug 3 auf dem Lagerzapfen 37 zentriert ist. Die Bohrung 44 weist durchgehende Längsnuten 60 auf, die zum einen dazu dienen, daß die Vorsprünge 58 des Lagerzapfens 37 bei der Montage des Arbeitswerkzeuges 3 auf dem Lagerzapfen 37 die Bohrung 44 passieren können (Fig. 3). Zum anderen dienen die Längsnuten 60 auch als Blockiereinrichtung. Wird nämlich der Deckel 5 vom Behälter 1 abgenommen, so wird durch die Feder 7 die Abtriebswelle 31 so weit nach oben geschoben, daß die Vorsprünge 58 mit ihrer Unterseite an der Ringstufe 43 anschlagen. Da in dieser Position, wie in Fig. 1 dargestellt, die Vorspannkraft der Feder 7 immer noch nicht aufgebraucht ist, gleiten bei noch rotierendem Arbeitswerkzeug 3 die Vorsprünge 58 in die Längsnuten 60 hinein (Fig. 3), so daß das Arbeitswerkzeug 3 schlagartig abgebremst wird. Es ist aber auch denkbar, daß die Hülse 42 über ein in der Zeichnung nicht darge stelltes Gewinde in der Bohrung 55 der Abtriebswelle 38 fest eingeschraubt ist.

Die Wirkungsweise des Zerkleinerungsgerätes nach den Figuren 1 und 2 ist folgende:
Befindet sich das Arbeitswerkzeug 3, wie in Fig. 1 dargestellt, im Behälter 1 und ist auf dem Lagerzapfen 37 gelagert, so stützt sich das Arbeitswerkzeug 3 über seine am Kolben 38 ausgebildete Stirnfläche 61 am freien Ende 62 des Lagerzapfens 37 ab. Das von den Messern 54 und der Abtriebswelle 31 entstehende Gewicht wird über die Feder 7, den Kolben 38 auf den Lagerzapfen 37 übertragen, wobei die Federkraft der Feder 7 so groß bemessen sein muß, daß die Vorsprünge 58 in die Längsnuten 60 eingreifen (Fig. 3).

Wird anschließend der Deckel 5 ordnungsgemäß auf den Behälter 1 aufgesetzt, so greift die Längsverzahnung 32 in die am Arbeitswerkzeug 3 ausgebildete, entsprechende Verzahnung 63 ein, bis die am Aufnahmeteil 30 ausgebildete Stirnfläche 64 an der Stirnfläche 65 des Arbeitswerkzeuges 3 anschlägt. Bevor der Deckel 5 ordnungsgemäß auf dem Rand des Behälters 1 aufsitzt, wird nun über die Stirnfläche 65 das Arbeitswerkzeug 3 entgegen der Kraft der Feder 7 zum Boden 36 des Behälters 1 hin verschoben, bis die in Fig. 2 dargestellte Position erreicht ist. Da sich der Kolben 38 am freien Ende 62 des Lagerzapfens 37 abstützt, bleibt dieser bei der axialen Verschiebung der Abtriebswelle 31 in der in den Figuren 1 und 2 dargestellten Stellung stehen, während sich die Abtriebswelle 31 zum Boden 36 hin bewegt, so daß sich dabei der zweite Anschlag 41 vom ersten Anschlag 40 entfernt. Bei dieser Bewegung gelangt die Längsverzahnung 60 außer Eingriff von den Vorsprüngen 58, so daß diese in den von der Bohrung 55 gebildeten Freiraum eindringt. In dieser Stellung (Fig. 2) ist auch das erste Reibelement 10 von dem zweiten Reibelement 11 entfernt angeordnet, so daß die Bremse 33 außer Eingriff ist, das heißt, das Arbeitswerkzeug 3 wird nicht mehr an dem Lagerzapfen 37 abgebremst. Nun können die sich im Behälter 1 befindlichen Nahrungsmittel, wie Petersilie oder Zwiebeln von den Messern 54 zerschnitten bzw. zerkleinert werden, wenn die Welle 9 von einem in der Zeichnung nicht dargestellten Antriebsmotor einer Küchenmaschine, beispielsweise Stabmixer, in Drehung versetzt wird.

Wird anschließend der Stabmixer von der ersten Kupplung 4 entfernt, so rotiert das Arbeitswerkzeug 3 noch nach, allerdings nur solange, bis der Deckel 5 vom Behälter 1 entfernt wird. In diesem Moment wandert nämlich die Abtriebswelle 31 wieder in Fig. 1 nach oben, bis der zweite Anschlag 41 sich kurz vor dem ersten Anschlag 40 befindet. In dieser Stellung sind nun das erste und zweite Bremselement 10, 11 in Reibeingriff, so daß das Arbeitswerkzeug 3 augebremst wird. Während sich die Drehbewegung des Arbeitswerkzeuges 3 weiter verlangsamt, greift nun die Längsverzahnung 60 in die Vorsprünge 58 ein (Fig. 3), so daß das Arbeitswerkzeug 3 schlagartig abgebremst wird. Und dies ist deshalb möglich, weil durch die Kraft der Feder 7 das Arbeitswerkzeug 3 immer noch entgegen der Pfeilrichtung X nach oben gedrückt wird, bevor der zweite Anschlag 41 am ersten Anschlag 40 anschlägt.

Die Verschiebung des Arbeitswerkzeuges 3 kann nach den Figuren 1 und 2 einerseits dadurch erfolgen, daß der Deckel 5 vom Behälter 1 entfernt wird, es besteht aber auch andererseits die Möglichkeit, daß die Welle 9 mit der Kupplungsvorrichtung 17 axial verschiebbar ist, so daß beim Aufsetzen eines Stabmixers dieser die Kupplungsvorrichtung 17 und diese wiederum das Arbeitswerkzeug 3 in seine bremsfreie Stellung verschiebt.

## Patentansprüche

1. Zerkleinerungsgerät zum Zerkleinern von Nahrungsmitteln, das ein in einem Gehäuse (1) drehbar gelagertes und von einer Abtriebswelle (31) und einem Messer (35) gebildetes Arbeitswerkzeug (3) aufweist, wobei die axial verlaufende Abtriebswelle (31) über eine Kupplungsvorrichtung (4 und/oder 6) mit der Antriebseinrichtung einer Küchenmaschine (1), insbesondere Handmixer, kuppelbar ist, wobei im Übertragungsweg zwischen der Kupplungsvorrichtung (4 und/oder 6) und dem Arbeitswerkzeug (3) eine Bremse (33) ausgebildet ist, die von einer Feder (7) steuerbar ist,
**dadurch gekennzeichnet,**
daß die Bremse (33) in der Abtriebswelle (31) des Arbeitswerkzeuges (3) ausgebildet ist und daß die Bremse (33) durch die relative Verschiebung des Arbeitswerkzeuges (3) gegenüber dem Gehäuse (1) steuerbar ist.

2. Zerkleinerungsgerät nach Anspruch 1,
**dadurch gekennzeichnet,**
daß die Abtriebswelle (31) auf einem im Boden (36) des Behälters (1) befestigten Lagerzapfen (37) drehbar und gegenüber diesem axial verschiebbar ist, daß die Abtriebswelle (31) eine Bohrung (34) aufweist, in der die Feder (7) ausgebildet ist, die sich einerseits mit Vorspannung über den Lagerzapfen (37) und andererseits an einer dem Lagerzapfen (37) gegenüberliegenden Stirnfläche (39) der Abtriebswelle (31) derart abstützt, daß beim Entkuppeln des Arbeitswerkzeuges (3) von der Antriebswelle (9) das Arbeitswerkzeug (3) von der Feder (7) soweit gegenüber dem Lagerzapfen (37) axial verschoben wird, daß dabei ein an der Abtriebswelle (38) des Arbeitswerkzeuges (3) ausgebildetes erstes Bremselement (10) an einem am Lagerzapfen (37) ausgebildetes zweites Bremselement (11) in Reibeingriff gelangt.

3. Zerkleinerungsgerät nach Anspruch 2,
**dadurch gekennzeichnet,**
daß sich die Feder (7) über ein in der Bohrung (34) axial verschiebbares Gleitelement (38) am Lagerzapfen (37) abstützt und daß am Gleitelement (38) ein erster Anschlag (14) ausgebildetet ist, der in Bremsstellung des Arbeitswerkzeuges (3) an einem in der Bohrung (34) angeordneten zweiten Anschlag (41) anschlägt.

4. Zerkleinerungsgerät nach Anspruch 3,
**dadurch gekennzeichnet,**
daß der zweite Anschlag (41) von einer in der Bohrung (34) fest angeordneten Hülse (42) gebildet wird, daß die Hülse (42) über die als zweites Reibelement (11) ausgebildete Ringstufe (43) das erste Bremselement (10) hintergreift und daß die Hülse (42) eine Bohrung (44) aufweist, über die das Arbeitswerkzeug (3) auf dem Lagerzapfen (37) drehbar und axial verschiebbar gelagert ist.

5. Zerkleinerungsgerät nach Anspruch 4,
**dadurch gekennzeichnet,**
daß die Bohrung (44) Längsnuten (60) aufweist, in die beim Bremsvorgang die am Lagerzapfen (37) ausgebildeten Vorsprünge (58) eingreifen, die aber in Betriebsstellung in die Bohrung (55) gelangen und so viel Abstand zum ersten Bremselement (10) aufweisen, daß das Arbeitswerkzeug (3) frei dreht.

6. Zerkleinerungsgerät nach Anspruch 1,
**dadurch gekennzeichnet,**
daß die Kupplungsvorrichtung aus einer ersten (4) und einer zweiten (6) Kupplung besteht, daß die erste Kupplung (4) mit einem Arbeitswerkzeug eines Handmixers, insbesondere Stabmixer, kuppelbar ist, daß die zweite Kupplung (6) über eine Längsverzahnung (32) mit der Abtriebswelle (31) in Eingriff steht, daß die erste (4) und zweite (6) Kupplung auf einer Welle (9) drehfest verbunden sind, daß die Welle (9) in einem Gleitlager (22) drehbar und axial verschiebbar angeordnet ist, daß die Welle (9) in einem einen Behälter (1) verschließenden Deckel (5) drehbar gelagert ist und daß die erste Kupplung (4) außerhalb und die zweite Kupplung (6) innerhalb des Behälters (1) bei auf dem Behälter (1) aufgesetzten Deckel (5) angeordnet ist.

## Claims

1. A comminuting device for comminuting food materials, including a processing tool (3) rotatably mounted in a container (1) and formed by a driven shaft (31) and by a cutting blade (35), with the axially extending driven shaft (31) being adapted to be coupled to the driving mechanism of a food processor (1), in particular a hand-held blender, by means of a coupling device (4 and/or 6), with a brake (33) controllable by a spring (7) being provided in the transmission path between the coupling device (4 and/or 6) and the processing tool (3),
**characterized in that** the brake (33) is provided in the driven shaft (31) of the processing tool (3), and that said brake (33) is controllable by displacement of the processing tool (3) relative to the container (1).

2. A comminuting device as claimed in claim 1,
**characterized in that** the driven shaft (31) is rotatably mounted on a trunnion (37) secured in the bottom (36) of the container (1) and is axially displaceable relative to said trunnion, that the driven shaft (31) includes a bore (55) accommodating the spring (7) which has one end thereof biased against the trunnion (37), while its other end takes support upon an end surface (39) of the driven shaft (31) at the end remote from the trunnion (37), that disengagement of the processing tool (3) from the driving shaft (9) results in an axial displacement of the processing tool (3) relative to the trunnion (37) by the force of the spring (7) by an amount such that a first brake element (10) provided on the driven shaft (31) of the processing tool (3) frictionally engages a second brake element (11) provided on the trunnion (37).

3. A comminuting device as claimed in claim 2,
**characterized in that** the spring (7) takes support upon the trunnion (37) through a sliding member (38) axially slidable within the bore (55), and that a first stop (40) is provided on the sliding member (38), said stop abutting a second stop (41) arranged in the bore (55) when the processing tool (3) is in the braked position.

4. A comminuting device as claimed in claim 3,
**characterized in that** the second stop (41) is formed by a sleeve (42) fixedly disposed in the bore (55), that said sleeve (42) engages behind the first brake element (10) through the annular shoulder (43) configured as the second friction element (11), and that said sleeve (42) includes a bore (44) within which the processing tool (3) is rotatably and axially slidably mounted on the trunnion (37).

5. A comminuting device as claimed in claim 4,
**characterized in that** the bore (44) includes longitudinal grooves (60) into which the projections (58) provided on the trunnion (37) engage during the braking operation, said projections entering, however, in the operating position the bore (55) and being spaced from the first brake element (10) such a distance that the processing tool (3) rotates freely.

6. A comminuting device as claimed in claim 1,
**characterized in that** the coupling device is comprised of a first (4) and a second coupling means (6), that said first coupling means (4) is adapted to be coupled to a processing tool (3) of a hand-held blender, in particular an immersion blender, that said second coupling means (6) is in engagement with the driven shaft (31) through a longitudinally toothed section (32), that said first (4) and said second (6) coupling means are connected on a shaft (9) in a manner preventing relative rotations that said shaft (9) is rotatably and axially slidably disposed in a plain bearing (22), that said shaft (9) is rotatably mounted in a lid (5) closing the container (1), and that said first coupling means (4) is arranged outside, and said second coupling means (6) is arranged inside, the container (1) with the lid (5) fitted onto the container (1).

## Revendications

1. Appareil de broyage destiné au broyage d'aliments, qui comporte un outil de travail (3) logé en rotation dans un récipient (1) et formé par un arbre mené (31) et un couteau (35) ; l'arbre mené, qui s'étend axialement, pouvant être accouplé par l'intermédiaire d'un dispositif d'accouplement (4 et/ou 6) au dispositif d'entraînement d'un robot de cuisine (1), notamment un mixer à main ; un frein (33), qui peut être commandé par un ressort (7), étant réalisé dans la ligne de transmission entre le dispositif d'accouplement (4 et/ou 6) et l'outil de travail (3),
caractérisé en ce que le frein (33) est réalisé dans l'arbre mené (31) de l'outil de travail (3), et en ce que le frein (33) peut être commandé grâce au déplacement relatif de l'outil de travail (3) par rapport au récipient (1).

2. Appareil de broyage selon la revendication 1, caractérisé en ce que l'arbre mené (31) peut tourner sur un tourillon (37) fixé sur le fond (36) du récipient (1) et peut être déplacé axialement par rapport audit tourillon, en ce que l'arbre mené (31) présente un alésage (34) dans lequel est réalisé le ressort (7) qui prend appui d'une part avec précontrainte par l'intermédiaire du tourillon (37) et d'autre part sur une face frontale (39) de l'arbre mené (31), qui est située vis-à-vis du tourillon (37), de telle sorte que lorsque l'outil de travail (3) est désaccouplé de l'arbre moteur (9), l'outil de travail (3) est déplacé par le ressort (7) par rapport au tourillon (37) jusqu'à ce qu'un premier élément de freinage (10) réalisé sur l'arbre mené (38) de l'outil de travail (3) vienne en prise par friction avec un second élément de freinage (11) réalisé sur le tourillon (37).

3. Appareil de broyage selon la revendication 2, caractérisé en ce que le ressort (7) prend appui sur le tourillon (37) par l'intermédiaire d'un élément de glissement (38) axialement déplaçable dans l'alésage (34), et en ce que sur l'élément de glissement est réalisée une première butée (14) qui vient buter en position de freinage de l'outil de travail (3) sur une seconde butée (41) agencée dans l'alésage (34).

4. Appareil de broyage selon la revendication 3, caractérisé en ce que la seconde butée (41) est formée par une douille (42) agencée solidairement dans l'alésage (34), en ce que la douille (42) engage par l'arrière le premier élément de freinage (10) par l'intermédiaire du gradin annulaire (43) réalisé en tant que second élément de friction (11), et en ce que la douille (42) comporte un alésage (44) par l'intermédiaire duquel l'outil de travail (3) est monté à déplacement axial et rotatif sur le tourillon (37).

5. Appareil de broyage selon la revendication 4, caractérisé en ce que l'alésage (44) comporte des gorges longitudinales (60) dans lesquelles les saillies (58) formées sur le tourillon (37) s'engagent lors du freinage mais qui, pendant le fonctionnement, parviennent dans l'alésage (55) en présentant un espace tel par rapport au premier élément de freinage (10) que l'outil de travail (3) tourne librement.

6. Appareil de broyage selon la revendication 1, caractérisé en ce que le dispositif d'accouplement est constitué par un premier (4) et un second (6) accouplement, en ce que le premier accouplement (4) peut être accouplé avec un outil de travail d'un mixer à main, en particulier un mixer plongeant, en ce que le second accouplement (6) est en engagement avec l'arbre mené (31) par une denture longitudinale (32), en ce que le premier (4) et le second (6) accouplement sont reliés solidaires en rotation sur un arbre (9), en ce que l'arbre (9) est agencé en rotation et à déplacement axial dans un palier à glissement (22), en ce que l'arbre (9) est monté en rotation dans un couvercle (5) fermant un récipient (1), et en ce que le premier accouplement (4) est agencé en dehors et le second accouplement (6) à l'intérieur du récipient lorsque le couvercle (5) est mis en place sur le récipient (1).
